# EUROPEAN PATENT APPLICATION

(11) **EP 2 286 660 A1**
(43) Date of publication of application: **23.02.2011**
(21) Application number: 10173553.8
(22) Date of filing: 20.08.2010
(51) Int. Cl.: A01G 9/08

(54) **Device, assembly and methods for picking up and putting down objects capable of being picked up**

(30) Priority: 21.08.2009 NL 2003378
(71) Applicant: Visser 's-Gravendeel Holding B.V., 3295 KH 's-Gravendeel (NL)
(72) Inventor: Visser, Cornelis Frans Taco, 3295 AE, 's-Gravendeel (NL); Preesman, Johan Christiaan, 3274 CD, Heinenoord (NL)
(74) Representative: Grootscholten, Johannes A.M.

(57) **Abstract**

The present invention relates to a device for picking up and setting down objects capable of being picked up, such as plant pots, from or onto a surface for the objects. The device comprises a movable frame (8) such as a forklift truck (1), a guide (10) on the frame, a fork (2) and a drive with at least one spacer (7) which during use defines a minimal space between the fork and the surface. The invention also relates to an assembly. This comprises a fork (2) which is at least connectable to a guide (10) on a movable frame (8) and which is adapted to carry at least one of the objects, and at least one spacer (7) which during use defines a space between the fork and the surface. The invention also relates to a method for picking up objects from a surface with a fork on a movable frame.

## Description

The present invention relates to a device for picking up and setting down objects capable of being picked up, such as plant pots, from or onto a surface for the objects. The known devices comprise a movable frame such as a forklift truck; a guide on the frame; and a fork which at least during use is connected to the guide for up and/or downward displacement thereof, and which is adapted to carry at least one of the objects; and a drive which in actuated state moves the fork up and/or downward along the guide, and further having at least one spacer which during use defines a minimal space between the fork and the surface. In addition, the invention also relates to an assembly at least comprising: a fork which is connectable to a guide on a movable frame and which is adapted to carry at least one of the objects, and at least one spacer which during use defines a minimal space between the fork and the surface. The invention further relates to a method for picking up objects from a surface with a fork on a movable frame, and the method for setting down objects onto a surface with a fork on a movable frame.

Such devices, assemblies and methods are for instance known from the field of application of placing plant pots apart or closer together, and in particular the closest prior art from which the features in the preambles of the independent device and method claims are known, i.e. publication WO-2004/077.932 in the name of the inventors of the present invention.

The prior art does however have various drawbacks and shortcomings, relating mainly, though not exclusively, to the operation. The spacer is formed here by a frame which is separate of the device and the assembly and which lies on a surface and can optionally roll or travel thereover. During pick-up of the objects the forks of a device or assembly can rest on this frame forming a spacer.

In for instance the above stated prior art a driver must make a relatively great effort to acquire complete facility in the operation of the device and the assembly and in performing the method.

In for instance the case of a device or assembly without spacer, when the objects have to be set down, the objects, in this case in the form of plant pots, on the outer end of the fork drop out of the fork from a height of about 1 to 2 cm. The actual height of the fork above the surface is therefore related to the height of the objects and the method of gripping thereof. If it should be the case that the fork is positioned higher above the surface for the purpose of setting down the objects, the resulting drop distance is then greater and the pots frequently tip over. If on the other hand this distance is too small, the pots then leave the fork too soon and the spacing further apart becomes very irregular. The forklift truck driver himself must therefore estimate this distance visually, this while the driver is sitting on a forklift truck at a distance of about two metres or more behind the outer ends of the fork. It requires a great deal of practice and skill to prevent the plant pots tipping over.

In addition, the fork is usually set in a forward inclining position during setting-down, this further impeding the view of the driver of (the height above the surface of) the fork.

A further complication is the problem that the fork becomes lighter as more pots are set down from the fork. The fork then becomes lighter and, because the usually hydraulic pressure in a lifting system (with for instance a mast as guide for substantially vertical movement of the fork) is not adjusted thereto, the end of the fork remote from the forklift truck moves upward, whereby the drop height of the plant pots is further increased. The driver of the forklift truck, who has to operate the fork, must during spacing further apart therefore move the tips of the forks (inclining) downward a number of times and/or move the fork downward along the mast. It is however still the case here that the tolerance (the height of the bottom of the objects above the surface) amounts to only very little, for instance one centimetre. Operation of such a device thus requires much skill, which is therefore very difficult to acquire. The frame which forms the spacer and which rests on the surface and is displaceable thereover in rolling or travelling manner is intended to obviate or at least alleviate these problems.

During pick-up or setting-down of the objects the fork supports on the surface with the loose spacer between the fork and the surface, so that a height within the desired tolerance can be effected without being dependent on the experience and skill of the driver. A downward pressure can be maintained in the hydraulic system used to set the height of the fork along the mast, and the spacers ensure that the fork does not then come to rest on the surface, while the fork is simultaneously held at a height such that the objects will drop through the desired distance (within the tolerance) when they come off the fork. Pick-up can take place in the same manner. Conveyors or carriers, which can be arranged over or along teeth of the fork, must here be driven at the same speed as, but in opposite direction to, the movement of the frame over or along the surface. This thus provides an improvement in respect of the problems with devices and assemblies according to the prior art. A high degree of skill and experience is however still required to work with such a loose frame forming a spacer. The driver of the forklift truck or operator of the frame must control in precisely correct manner the travel direction thereof when approaching such a frame, which is then lying or resting on the surface, since otherwise the fork on the frame will not come to lie on supports intended for this purpose and/or the separate frame moves obliquely under the fork, whereby the support of the fork on the separate frame may be insufficient during use to realize placing of the objects in said improved manner. Furthermore, two such frames are necessary in the known art, both at the location where objects are picked up and at the destination and/or location where these objects are set down. The frames are sizeable and bulky in order to be able to properly support the fork and optimize the chance of proper support thereof, whereby the cost of implementing the known art in practice is a considerable obstacle. In addition, the intended improvement in the convenience of use is far from achieved.

The present invention has for its object to obviate or at least alleviate at least one of the above stated or other problems of a prior art device, for which purpose a device according to the invention is distinguished from a prior art device in that the spacer comprises a substantially downward extending pivot arm which is arranged for free pivoting on at least one of the frame, the guide and the fork.

It is noted that the invention is thus also embodied in an assembly of a fork with the spacer; a method for picking up and a method for setting down (optionally spaced further apart) of the objects, in particular, but not exclusively, plant pots.

A pivot arm is an extremely easy, simple and elegant embodiment of a spacer which is favourable in terms of cost, and in a position of use can be pivoted under the fork and can be taken out of use by being rotated away from a position under the fork so that this fork, for instance for the purpose of picking up objects such as plant pots, can descend or be lowered onto the surface for the objects. For setting-down of the objects the pivot arm can be pivoted into a position of use under the fork so as to precisely control the intended and desired distance between the fork and the surface. Since the device/the assembly according to the invention has the further feature that the pivot arm is arranged on at least one of the frame, the guide and the fork, the spacer then has the effect of accurately determining the drop height from the position arranged on the frame or the guide or the fork. Embodiments arranged on the guide or the frame can make it easier for the spacer to be taken out of use and the fork to be then lowered onto the surface, although this can also be achieved with a rearward extending connecting piece (11) on the fork. Pivoting the pivot arm in and out of the operative position can take place by moving the frame in a suitable direction and gradually lowering the fork. The freely pivotable pivot arm will then be urged away from or toward the operative position without the driver or user having to leave his/her driver position.

In a preferred but non-limitative embodiment a device/assembly according to the invention has the feature that the spacer comprises displacing means from the group at least comprising: at least one roller, at least one wheel, at least one swivel wheel, at least one tyre or any other displacing means. Additionally or alternatively, even slide blocks or wear bodies can be applied. What is important is to prevent the spacer obstructing the movement of the frame. The displacing means are preferably arranged here on a free outer end of the pivot arm.

The pivot arm is preferably adjustable in the length, so that the length thereof can then be selected and/or set in accordance with: the dimensions of the fork, the dimensions of the objects, in particular plant pots; the method of picking up the objects (between or on teeth of the fork); and the desired maximum drop height of the plant pots.

In such an embodiment the device/the assembly can be such that the arm is adjustable in the length in accordance with a desired use-dependent space between the fork and the surface. It is possible to envisage a cylinder as arm, or for instance a telescopic arm, a screw spindle arm or other similar arm. A highly effective device/assembly can thus be realized with very simple and reliable mechanical means.

In a preferred but non-limitative embodiment a device/assembly according to the invention has the feature that the frame and/or the guide comprises an inclining mechanism with which a position of the guide can be adjusted relative to the vertical. The end of the fork remote from the frame and the guide can thus be oriented downward in order to set down or simply place the objects on the surface. Particularly in an embodiment with carriers or conveyors on or along the teeth of the fork (but also in an embodiment with a fork without any carrier or conveyor) such an inclination can be utilized for controlled setting or putting down of the objects.

In a preferred but non-limitative embodiment a device/assembly according to the invention has the feature that the spacer is arranged in use under the fork as far as possible in the direction of the side oriented toward the frame. The spacer will thus not form an obstacle during tilting of the guide and/or the fork, and furthermore - and even in an embodiment without such an option of allowing tilting of the guide and/or the fork - the spacer will, with such a positioning, not be able to unintentionally knock over any objects.

In a preferred but non-limitative embodiment a device/assembly according to the invention has the feature that at least two spacers are arranged on either side in width direction of the fork transversely of the direction of movement of the frame. The most stable possible support can thus be provided for the fork.

After the foregoing elucidation of the invention in general terms there follows below a description of several specific embodiments of the invention, which should in no way be interpreted as limitative, to the extent this is not also apparent from the independent claims of the appended set of claims, and wherein in the various views and different embodiments the same and/or similar parts, aspects and components can be designated with the same reference numerals, and in which:
Figure 1 is a perspective view of a device and assembly, both according to the present invention;
Figures 2-8 show various operating modes of the device and the assembly of figure 1; and
Figures 9 and 10 each show a detail side view of an alternative embodiment to figures 1-8.

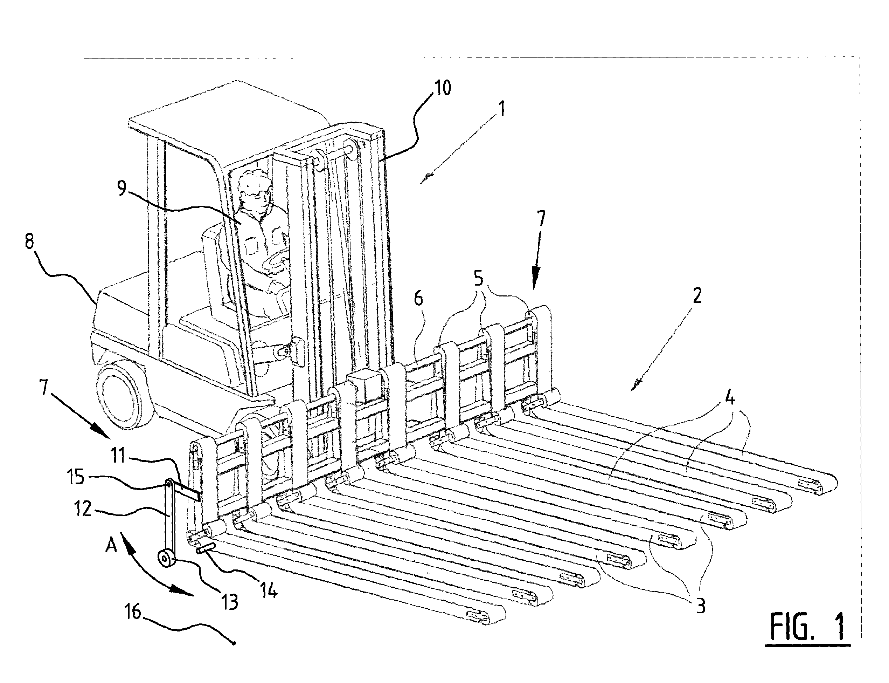

Fig. 1 shows a fork lift truck 1. Forklift truck 1 comprises a frame 8 and a guide in the form of mast 10. On frame 8, which is movable in autonomous manner, a driver 9 can take up position for the purpose of operating the device in the form of forklift truck 1. A fork 2 is movable up and downward on mast 10. Fork 2 comprises a series of teeth 3, and each tooth is equipped with a flexible carrier 4. Flexible carriers 4 can be driven collectively using a shared drive shaft 6 which is connected to a motor (not shown), for instance a hydraulic or an electric motor. Each of the flexible carriers 4 is coupled by means of a drive wheel 5 to drive shaft 6, so that rotation of drive shaft 6 results in simultaneous displacement of flexible carriers 4 over or along teeth 3. Flexible carriers 4 can also be oriented laterally in another embodiment, and it is even possible for fork 2 to comprise no flexible carriers 4 or other transport means.

Spacers 7 are arranged on the sides of fork 2, i.e. on either side in the width of fork 2 relative to the direction of forward movement of frame 8 of forklift truck 1. In the embodiment shown here each of the spacers 7 (only one of which is visible) comprises a beam 11 which is arranged on fork 2 and which extends rearward from fork 2 in longitudinal direction relative to the direction of movement of frame 8. A pivot arm 12 is arranged on a rotation shaft 15 at the free outer end of beam 11. Pivot arm 12 is pivotable in the direction indicated with arrow A. A travel wheel 13 is arranged on the outer end of pivot arm 12 opposite rotation shaft 15. Travel wheel 13 on pivot arm 12 can roll over the surface 16 over which frame 8 of forklift truck 1 can also move. It is possible to dispose plant pots 17 on this surface 16. It is likewise possible for plant pots 17 to be disposed on a surface other than that over which frame 8 of forklift truck 1 can move.

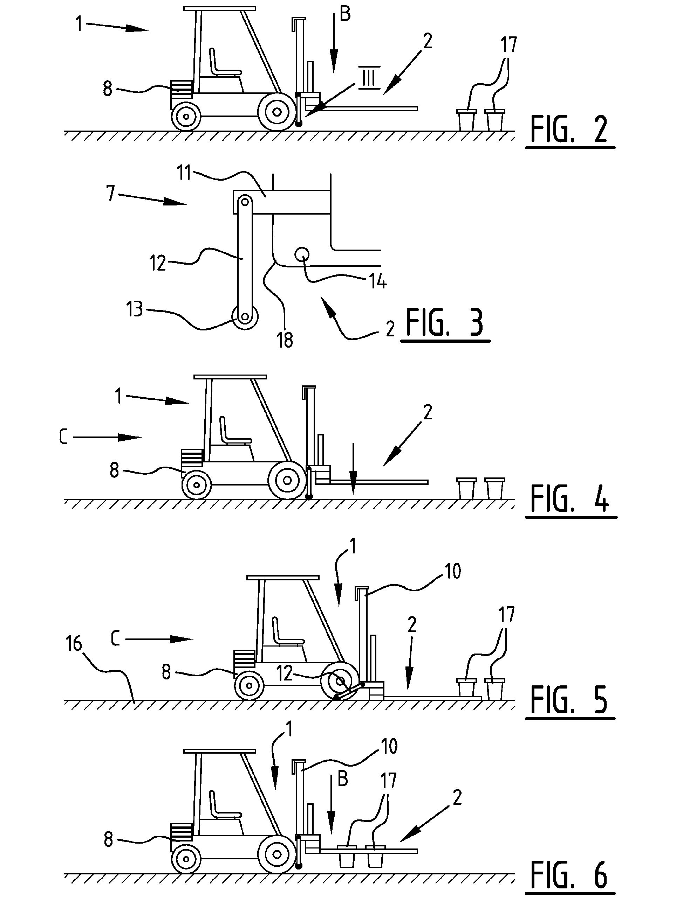

Pivot arm 12 can rotate freely forwards and backwards about rotation shaft 15 in the direction of arrow A. In a forward rotated position the pivot arm 12 comes to lie against a stop shaft 14 which prevents further rotation of pivot arm 12. When pivot arm 12 lies against stop shaft 14, travel wheel 13 lies below the underside of fork 2 in order to maintain a distance or intermediate space between surface 16 and fork 2, or at least between surface 16 and the bottom of plant pots 17 picked up with fork 2. The foregoing and the operation of the device and assembly shown in fig. 1 will be further elucidated hereinbelow with reference to figures 2-8.

Shown in fig. 2 is a forklift truck 1 having on the side of fork 2 the spacer 7, which is shown in more detail in fig. 3, this also corresponding with that shown in fig. 1. From the position shown in fig. 2 the fork 2 is moved downward in the direction of arrow B. When, as shown in fig. 4, frame 8 of forklift truck 1 moves forward here in the direction of arrow C, pivot arm 12 of spacer 7 pivots rearward to the position shown in fig. 5. Forklift truck 1 can then move further forward in the direction of arrow C with fork 2 flat on the surface 16 for the purpose of inserting teeth 3 of fork 2 between rows of plant pots 17. Fork 2 can only comprise two teeth, wherein a single row of plant pots 17, which then extends in the travel direction of arrow C, is picked up between these two teeth 3 of fork 2. Once forklift truck 1 has travelled sufficiently far in the direction of arrow C with fork 2 lying in a position on surface 16, fork 2 can be displaced upward along mast 10 under the influence of a drive (not shown), whereby plant pots 17, as embodiment of the objects for picking up, are thus lifted from surface 16.

Setting or putting down or spacing further apart of plant pots 17 is described with reference to figures 6-8. Fig. 6 shows the starting position hereof, wherein plant pots 17 are received between teeth 3 of fork 2. Fork 2 is herein moved downward along mast 10 in the direction of arrow B and, in contrast to the situation of fig. 4, frame 8 of forklift truck 1 travels here in backward direction corresponding to that of arrow D, which is in opposite direction to arrow C. With wheel 13 of spacer 7 in contact with surface 16, this movement of the forklift truck in the direction of arrow D results in pivot arm 12 pivoting away in the direction of arrow E and coming to lie against pin 14. Alternatively, and in slightly changed configuration, pivot arm 12 could also come to lie against a heel 18 of fork 2, this heel 18 also being shown in fig. 3. Realized in any case with pin 14 or heel 18 is that, when pivot arm 12 reaches a position lying against pin 14 or heel 18, the pivot arm cannot pivot any further. A minimal distance between fork 2 and the surface can thus be defined. The length of pivot arm 12 can be selected in accordance with the height of the plant pots 17 to be processed. Pivot arm 12 can be arranged interchangeably on rotation shaft 15 for this purpose, and a number of pivot arms of differing length can be carried on board forklift truck 1 or stored elsewhere, or specific configurations of pivot arm 12 can be applied, concerning which further information follows below.

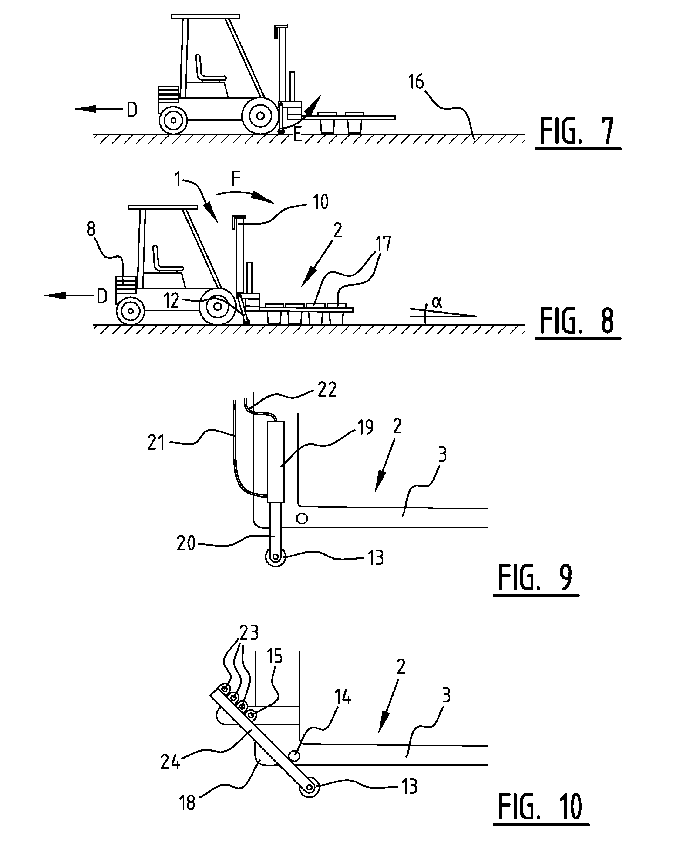

When pivot arm 12 is pivoted forward in the direction of arrow E in fig. 7, and becomes fixed under fork 2 in order to ensure a certain predetermined height of fork 2 relative to surface 16, forklift truck 1, and more particularly frame 8 thereof, can travel further in the direction of arrow D with the purpose of putting or setting down or spacing further apart plant pots 17. For this purpose mast 10 can be tilted forward or inclined with an inclining mechanism, which is per se conventional and further details of which will not be given here. An inclination of mast 10 has the direct result that the teeth and fork 2 also come to lie at an angle relative to the horizontal corresponding to surface 16, this angle being designated as angle α in fig. 8.

When forklift truck 1 travels further in the direction of arrow D with mast 10 tilted forward in the direction of arrow F, carriers 4 or other conveyors can be set into operation in order to displace plant pots 17 at the outer end of the teeth of fork 2. Upon reaching the outer end of fork 2, plant pots 17 are released for the purpose of being set down on surface 16 at a rate directly determined by the speed of carriers 4. This speed is in a certain proportion to the travel speed of frame 8 in the direction of arrow D, so that the distance between set down plant pots can be varied relative to the initial intermediate distance as shown for instance in figures 2 and 5. Plant pots 17 can thus be placed closer together or further apart on surface 16.

With pivot arm 12 in the forward pivoted position of for instance fig. 8, a continuous limited pressure can be exerted on fork 2; pivot arm 12 does after all prevent fork 2 being able to descend to a level lower than a desired height. The forklift truck can then travel forward in the direction opposite to that of arrow D in order to pick up pots 17 one by one or, conversely, backwards in the direction of arrow D in order to set down pots 17 one by one. At this desired height it is possible to set down plant pots 17 within for instance the tolerance of for instance 1 cm above surface 16, so that there remains only a very small drop height for plant pots 17 when they are released from fork 2. With the tips of the fork at a lower height than the edge of pots 17, the pots can be picked up one by one, other than in the mode of use described with reference to figures 2-6, where on the contrary pick-up of a plurality of pots 17 takes place simultaneously for a number of pots 17 in one operation.

Fig. 9 shows an alternative embodiment of spacer 7 according to figures 1-8. In fig. 9 spacer 7 is replaced by a double-action cylinder 19 with a wheel 13 on the outer end of a piston rod 20. Double-action cylinder 19 is connected to two hydraulic conduits 21, 22 for respectively an up and downward movement of piston rod 20. The minimum height to which fork 2 can descend during setting-down or discharging or spacing further apart of plant pots can thus be determined, for instance in accordance with the height of these plant pots 17 (not shown in fig. 9). This allows more freedom than the configuration of figures 1-8, where the height is determined substantially by the length of pivot arm 12, which must be replaced when other dimensions of plant pot 17 are about to be used or must be processed.

Fig. 10 shows another alternative embodiment where diverse eyes 23 are arranged on a rod 24, and the effective height of the rod 24 forming a pivot arm can thus be set by selecting a desired eye 23 for arranging on rotation shaft 15.

It will thus be apparent that many different additional and alternative embodiments are possible within the scope of the present invention, to the extent these are not precluded by the letter or spirit of the appended claims and within which alternatives and equivalents are certainly included. Pin 14 can be replaced by a pivot arm 12, 24 lying against a heel 18 of fork 2, or be arranged on the pivot arm in order to support a part of the fork in a forward oriented position when it is moved downward. A travel wheel 13 can be replaced by a random roller or even a lowerable swivel wheel at the outer end of a preferably length-adjustable element or arm, wherein such an element or such an arm is preferably adjustable in the length in order to take account of the diverse dimensions of plant pots or other objects to be processed with the device and the assembly.

## Claims

1. Device (1) for picking up and setting down objects capable of being picked up, such as plant pots (17), from or onto a surface (16) for the objects, comprising:
- a movable frame (8) such as a forklift truck (1);
- a guide (10) on the frame; and
- a fork (2) which at least during use is connected to the guide (10) for up and/or downward displacement thereof, and which is adapted to carry at least one of the objects; and
- a drive which in actuated state moves the fork (2) up and/or downward along the guide (10), and further having
- at least one spacer (7) which during use defines a minimal space between the fork (2) and the surface (16),
**characterized in that**
the spacer (7) comprises a substantially downward extending pivot arm (12) which is arranged for free pivoting (A) on at least one of the frame (1), the guide (10) and the fork (2).

2. Device as claimed in claim 1, wherein the spacer (7) comprises displacing means from the group at least comprising:
at least one roller (13), at least one wheel, at least one swivel wheel, at least one tyre or any other displacing means.

3. Device as claimed in claim 2, wherein the displacing means are arranged on a free outer end of the pivot arm (12).

4. Device as claimed in claim 1, 2 or 3, wherein the pivot arm (12) is adjustable in the length in accordance with a desired use-dependent space between the fork (2) and the surface (16).

5. Device as claimed in claim 4, wherein the pivot arm (12) comprises a cylinder.

6. Device as claimed in at least one of the foregoing claims, wherein the frame (8) and/or the guide (10) comprises an inclining mechanism with which a position of the guide (10) can be adjusted relative to the vertical.

7. Device as claimed in at least one of the foregoing claims, wherein the spacer (7) is arranged in use under the fork (2) as far as possible in the direction of the side oriented toward the frame (8).

8. Device as claimed in at least one of the foregoing claims, wherein at least two spacers (7) are arranged on either side in width direction of the fork (2) transversely of the longitudinal direction of the fork (2).

9. Assembly (2, 7) comprising:
- a fork (2) which is at least connectable to a guide (10) on a movable frame (8), such as a forklift truck (1), and which is adapted to carry at least one object capable of being picked up, such as plant pots (17); and
- at least one spacer (7) which during use defines a space between the fork (2) and the surface (16),
**characterized in that**
the spacer (7) comprises a substantially downward extending pivot arm (12) which is arranged for free pivoting (A) on at least one of the frame (8), the guide and the fork (2).

10. Method for picking up objects from a surface with a fork on a movable frame, comprising of:
- aligning the fork to at least one object;
- rendering inoperative a pivot arm (12) forming a spacer (7) as claimed in at least one of the foregoing claims, which during use defines a minimal space between the fork and the surface; and
- extending the fork under or round the object.

11. Method for setting down objects onto a surface with a fork on a movable frame, comprising of:
- carrying at least one object with the fork, with the fork extended thereunder or therearound;
- setting into operation a pivot arm (12) forming a spacer (7) as claimed in at least one of the foregoing claims 1-9, which during use defines a minimal space between the fork and the surface; and
- setting the object down from the fork onto the surface.

12. Method as claimed in claim 11, further comprising of inclining the fork relative to the surface, and during movement of the frame setting down the objects in a direction corresponding to a higher side of the fork in the inclined position.
